# EUROPEAN PATENT APPLICATION

(11) **EP 4 818 984 A1**
(43) Date of publication of application: **07.10.2026**
(21) Application number: 25736259.0
(22) Date of filing: 02.01.2025
(51) Int. Cl.: G06N 3/0985, G06N 3/084, G06N 3/045

(54) **ELECTRONIC DEVICE, METHOD, SERVER, AND STORAGE MEDIUM FOR SCALING INSTANCE OF ARTIFICIAL INTELLIGENCE MODEL**

(30) Priority: 05.01.2024 KR 20240001859; 24.01.2024 KR 20240010628
(71) Applicant: Samsung Electronics Co., Ltd., Suwon-si, Gyeonggi-do 16677 (KR)
(72) Inventor: CHOI, Byungkwon, Suwon-si Gyeonggi-do 16677 (KR)
(74) Representative: Gulde & Partner
(86) International application number: PCT/KR2025/000056
(87) International publication number: WO 2025/147105

(57) **Abstract**

A method for executing an instance of at least one AI model may be provided, according to one embodiment. The method may comprise an operation of identifying a response time AI model for at least one AI model associated with a first service. The response time AI model may be configured to receive the number of user requests for the first service and the number of instances of each of the at least one AI model as input values, and output a response time. The method may comprise an operation of identifying a loss function set on the basis of the number of instances of the at least one AI model, the response time AI model, and an allowable response time. The method may comprise an operation of identifying at least one optimal number of instances for each of the at least one AI model by performing an optimization process on the loss function using the number of user requests for the first service. The method may comprise an operation of performing at least one operation for executing instances of the at least one AI model according to the at least one optimal number of instances. Other various embodiments are possible.

## Description

### [Technical Field]

The disclosure relates to an electronic device, a method, a server, and a storage medium for scaling an instance of an artificial intelligence (AI) model.

### [Background Art]

In order to provide a service of a specific purpose, a plurality of artificial intelligence (AI) models may be driven in a connected form. For example, AI models have been used in various fields such as content streaming, translation, photo editing, finance, drug discovery, law, and military. At least some of a plurality of AI models for one service may be implemented as a generative AI model. For example, a service providing content of a relatively high-capacity portable document format (PDF) file may include an embedding AI model for vectorizing a PDF file and a generative AI language model for processing a vector search result. In addition, research on a framework (e.g., LangChain) for linking the plurality of AI models has been actively conducted.

A service including an AI model may be generally performed using graphics processing units (GPU). A GPU is specialized for parallel processing, and accordingly, may be suitable for processing an AI model having a structure such as a deep neural network (DNN). A service provider may be equipped with and/or lease a plurality of GPUs to execute an AI model in order to provide a service. For example, a service provider may experimentally identify information related to a user request processed in a single GPU for a specific AI model, and determine a degree of equipping, a degree of leasing, and/or a degree of activating the GPU based on a result of the identifying.

The above information may be provided as a related art for the purpose of aiding understanding of the disclosure. No claim or determination has been made as to whether any of the foregoing may be applied as a prior art related to the disclosure.

### [Disclosure]

### [Technical Solution]

According to an embodiment, a method for executing an instance of at least one AI model may be provided. The method may comprise identifying a response time AI model for at least one AI model associated with a first service. The response time AI model may be configured to receive a number of user requests for the first service and a number of instances of each of the at least one AI model as an input value to output response time. The method may comprise identifying a loss function configured based on a number of instances of the at least one AI model, the response time AI model, and allowable response time. The method may comprise identifying at least one optimal number of instances for each of the at least one AI model by performing an optimization procedure for the loss function using the number of the user requests for the first service. The method may comprise performing at least one operation for executing instances for the at least one AI model according to the at least one optimal number of instances.

According to an embodiment, a storage medium storing at least one instruction readable by a computer may be provided. The at least one instruction, when executed by at least a part of at least one processor of an electronic device, may cause the electronic device to perform at least one operation. The at least one operation may comprise identifying a response time AI model for at least one AI model associated with a first service. The response time AI model may be configured to receive a number of user requests for the first service and a number of instances of each of the at least one AI model as an input value to output response time. The at least one operation may comprise identifying a loss function configured based on a number of instances of the at least one AI model, the response time AI model, and allowable response time. The at least one operation may comprise identifying at least one optimal number of instances for each of the at least one AI model by performing an optimization procedure for the loss function using the number of the user requests for the first service. The at least one operation may comprise performing at least one operation for executing instances for the at least one AI model according to the at least one optimal number of instances.

According to an embodiment, an electronic device may comprise at least one processor. The electronic device may comprise memory storing at least one instruction. The at least one instruction, when executed by at least a part of the at least one processor, may cause the electronic device to perform at least one operation. The at least one operation may comprise identifying a response time AI model for at least one AI model associated with a first service. The response time AI model may be configured to receive a number of user requests for the first service and a number of instances of each of the at least one AI model as an input value to output response time. The at least one operation may comprise identifying a loss function configured based on a number of instances of the at least one AI model, the response time AI model, and allowable response time. The at least one operation may comprise identifying at least one optimal number of instances for each of the at least one AI model by performing an optimization procedure for the loss function using the number of the user requests for the first service. The at least one operation may comprise performing at least one operation for executing instances for the at least one AI model according to the at least one optimal number of instances.

According to an embodiment, a training data generating method for training a response time AI model of a service associated with at least one AI model may be provided. The method may comprise setting a number of user requests. The method may comprise setting a number of instances of the at least one AI model. The method may comprise executing an instance of the at least one AI model according to the number of instances of the at least one AI model. The method may comprise generating user requests according to the number of user requests. The method may comprise identifying responses corresponding to each of the user requests based on processing the user requests based on the instance of the at least one AI model. The method may comprise generating training data which includes, as an input value, the number of user requests and the number of instances of the at least one AI model, and includes, as an output value, response time corresponding to the responses.

According to an embodiment, a storage medium storing at least one instruction readable by a computer may be provided. The at least one instruction, when executed by at least a part of at least one processor of an electronic device, may cause the electronic device to perform at least one operation. The at least one operation may comprise setting a number of user requests. The at least one operation may comprise setting a number of instances of the at least one AI model. The at least one operation may comprise executing an instance of the at least one AI model according to the number of instances of the at least one AI model. The at least one operation may comprise generating user requests according to the number of user requests. The at least one operation may comprise identifying responses corresponding to each of the user requests based on processing the user requests based on the instance of the at least one AI model. The at least one operation may comprise generating training data which includes, as an input value, the number of user requests and the number of instances of the at least one AI model, and includes, as an output value, response time corresponding to the responses.

According to an embodiment, an electronic device may comprise at least one processor. The electronic device may comprise memory storing at least one instruction. The at least one instruction, when executed by at least a part of the at least one processor, may cause the electronic device to perform at least one operation. The at least one operation may comprise setting a number of user requests. The at least one operation may comprise setting a number of instances of the at least one AI model. The at least one operation may comprise executing an instance of the at least one AI model according to the number of instances of the at least one AI model. The at least one operation may comprise generating user requests according to the number of user requests. The at least one operation may comprise identifying responses corresponding to each of the user requests based on processing the user requests based on the instance of the at least one AI model. The at least one operation may comprise generating training data which includes, as an input value, the number of user requests and the number of instances of the at least one AI model, and includes, as an output value, response time corresponding to the responses.

### [Description of Drawings]

In connection with a description of the drawings, the same or similar reference numerals may be used for the same or similar components.
FIG. 1A is a diagram for describing processing of a user request by an instance of an AI model according to an embodiment.
FIG. 1B is a diagram for describing resource use according to an embodiment.
FIG. 1C is a diagram for describing processing of a user request by an instance of an AI model according to an embodiment.
FIG. 1D is a diagram for describing resource use according to an embodiment.
FIG. 2A illustrates a block diagram of an electronic device according to an embodiment.
FIG. 2B illustrates a block diagram of an electronic device according to an embodiment.
FIG. 2C illustrates a block diagram of an electronic device according to an embodiment.
FIG. 3 is a flowchart for describing a method for executing an instance of an AI model according to an embodiment.
FIG. 4 is a flowchart for describing a method for training a response time AI model according to an embodiment.
FIG. 5A is a flowchart for describing a method for generating a training dataset of a response time AI model according to an embodiment.
FIG. 5B is a flowchart for describing a method for generating a training dataset of a response time AI model according to an embodiment.
FIG. 6A illustrates a block diagram of an electronic device according to an embodiment.
FIG. 6B illustrates a block diagram of an electronic device according to an embodiment.
FIG. 7 is a flowchart for describing a service executing method according to an embodiment.
FIG. 8 is a flowchart for describing a service executing method according to an embodiment.
FIG. 9 is a diagram for describing a generative artificial intelligence system according to an embodiment.

### [Mode for Invention]

Hereinafter, embodiments of the disclosure will be described in detail with reference to the accompanying drawings so that those skilled in the art to which the disclosure belongs can easily implement the disclosure. However, the disclosure may be implemented in various different forms and is not limited to embodiments set forth herein. In connection with the description of the drawings, the same or similar reference numerals may be used for the same or similar elements. Furthermore, in the drawings and relevant descriptions, descriptions of well-known functions and configurations may be omitted for clarity and brevity.

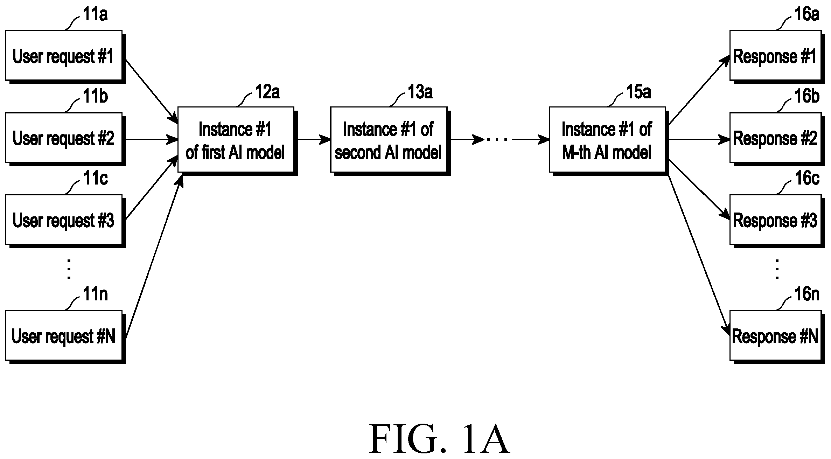

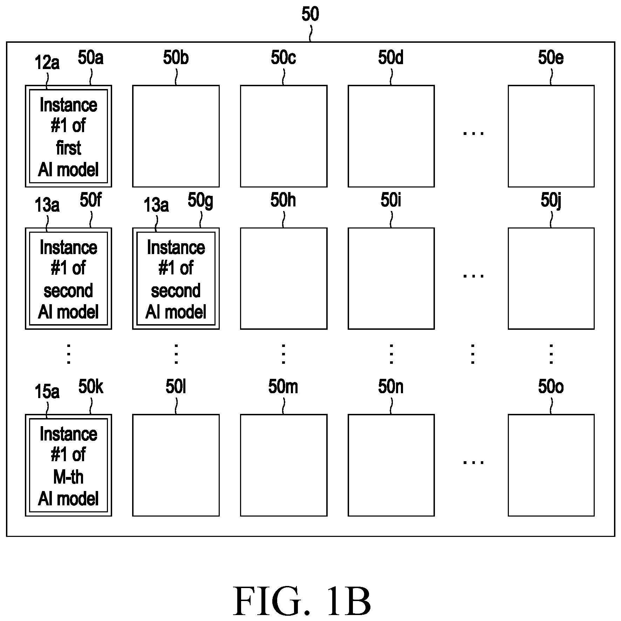

FIG. 1A is a diagram for describing processing of a user request by an instance of an AI model according to an embodiment. An embodiment of FIG. 1A will be described with reference to FIG. 1B. FIG. 1B is a diagram for describing resource use according to an embodiment.

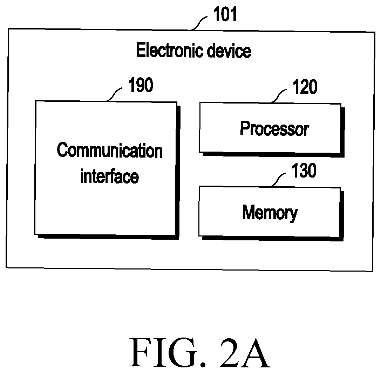

According to an embodiment, a service may be performed by linking at least one AI model. For example, a service providing content of a PDF file may receive the PDF file as an input and provide content (for example, it may be text, but there is no limitation therefor) corresponding to the corresponding PDF file as an output. The corresponding service may include an embedding AI model for vectorizing the PDF file and a generative AI language model for processing a vector search result. In an embodiment of FIG. 1A, the service may include (or link) at least one AI model (e.g., a first AI model to an M-th AI model). In order to perform the service, an electronic device 101, which will be described with reference to FIG. 2A, may execute instances 12a, 13a, 15a of the at least one AI model. An instance may be, for example, an object corresponding to a program (or an application) such as an AI model, and may be referred to as a replica, a pod, a container, or a virtual machine, but there is no limitation on a name thereof. The number of instances may correspond to, for example, a size of a resource (e.g., a GPU), and accordingly, the number of instances may be used interchangeably with the size of the resource, or the instance may be used interchangeably with the resource.

In an embodiment of FIG. 1A, it is assumed, for example, that one instance is executed for each of the at least one AI model. For example, a first instance 12a corresponding to a first AI model, a first instance 13a corresponding to a second AI model, and a first instance 15a corresponding to an M-th AI model may be executed. As the first instance 12a corresponding to the first AI model, the first instance 13a corresponding to the second AI model, and the first instance 15a corresponding to the M-th AI model are executed, a resource of a relatively small size may be used. For example, a resource 50 which may be used by the electronic device 101 is illustrated in FIG. 1B. The resource 50 may include, for example, at least one unit resource 50a to 50o. The at least one unit resource 50a to 50o may be, for example, a GPU, but is not limited thereto. For example, those skilled in the art will understand that the at least one unit resource 50a to 50o may include an entity for processing including at least one circuit (which may be, for example, but is not limited to, a central processing unit (CPU), a GPU, and/or a neural processing unit (NPU)) and/or an entity for storage (which may be, for example, but is not limited to, a volatile memory and/or a non-volatile memory). For example, one unit resource (e.g., the unit resource 50a) may correspond to one GPU or a designated unit size, but this is merely for a description, and there is no limitation on a size and/or expression scheme of the one unit resource.

For example, in an example of FIG. 1B, it is assumed that one unit resource (e.g., the unit resource 50a) may be required for execution of the first instance 12a corresponding to the first AI model, two unit resources (e.g., the unit resources 50f and 50g) may be required for execution of the first instance 13a corresponding to the second AI model, and one unit resource (e.g., the unit resource 50k) may be required for execution of the first instance 15a corresponding to the M-th AI model. Meanwhile, the number and/or size of resources required per instance of the AI model described above are merely exemplary. Accordingly, if one instance is executed for each of the at least one AI model, four unit resources may be required. The remaining idle resources may not be used, or may be used for another service, for example.

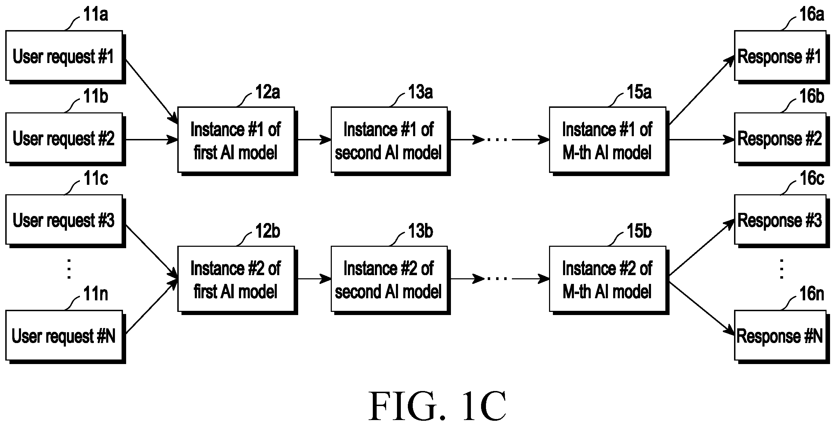

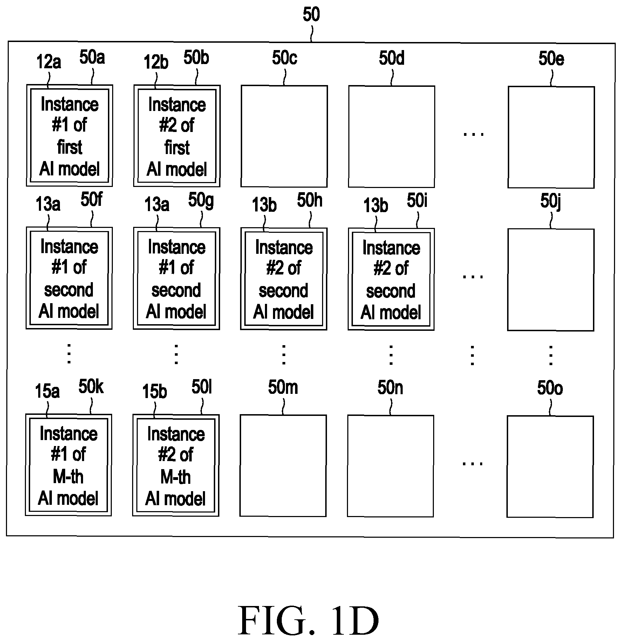

Meanwhile, referring back to FIG. 1A, N user requests 11a, 11b, 11c, ..., 11n may be inputted to the electronic apparatus 101. The user requests 11a, 11b, 11c, ..., 11n may be associated with, for example, the service. For example, the user request 11a may be processed by the first instance 12a of the first AI model, and a first processing result may be provided from the first instance 12a of the first AI model. The first processing result may be processed by the first instance 13a of the second AI model, and accordingly, a second processing result may be provided by the first instance 13a of the second AI model. Through sequential processing of processing results, the first instance 15a of the M-th AI model may input and process an (N-1)-th processing result. The first instance 15a of the M-th AI model may provide an N-th processing result as a response 16a. Accordingly, the response 16a corresponding to the user request 11a may be provided. Based on the above-described process, responses 16a, 16b, 16c, ..., 16n respectively corresponding to a plurality of user requests 11a, 11b, 11c, ..., 11n may be provided. Meanwhile, since processing needs to be performed by the instances 12a, 13a, 15a, time (which may be named response time) during which the responses 16a, 16b, 16c, ..., 16n respectively corresponding to the plurality of user requests 11a, 11b, 11c, ..., 11n are provided may take relatively long. In order to reduce the response time, the electronic device 101 may increase the number of instances of the at least one AI model, and this may also be referred to as scaling out. Hereinafter, an increase in the number of instances will be described with reference to FIGS. 1C and 1D.

FIG. 1C is a diagram for describing processing of a user request by an instance of an AI model according to an embodiment. An embodiment of FIG. 1C will be described with reference to FIG. 1D. FIG. 1D is a diagram for describing resource use according to an embodiment.

According to an embodiment, an electronic device 101, which will be described later in FIG. 2A, may execute two instances for each of at least one AI model. For example, the electronic device 101 may execute two instances 12a, 12b corresponding to a first AI model, two instances 13a, 13b corresponding to a second AI model, and two instances 15a, 15b corresponding to an M-th AI model. As a plurality of instances 12a, 12b, 13a, 13b, 15a, 15b are executed, user requests 11a, 11b, 11c, ..., 11n may be distributedly processed. For example, one instance group 12a, 13a, 15a may process a portion of the user requests 11a, 11b, 11c, ..., 11n, and another instance group 12b, 13b, 15b may process the remaining portion of the user requests 11a, 11b, 11c, ..., 11n. Accordingly, response time during which responses 16a, 16b, 16c, ..., 16n, which the one instance group 12a, 13a, 15a corresponds to the user requests 11a, 11b, 11c, ..., 11n, are provided may be shorter than response time in an embodiment of FIG. 1A. Meanwhile, by executing relatively more instances, a relatively larger unit resource may be required. For example, referring to FIG. 1D, two unit resources 50a, 50b may be used for execution of each of two instances 12a, 12b corresponding to the first AI model. Four unit resources 50f, 50g, 50h, 50i may be used for execution of each of two instances 13a, 13b corresponding to the second AI model. Two unit resources 50k, 50l may be used for execution of each of two instances 15a, 15b corresponding to the M-th AI model. As in FIGS. 1B and 1D, to execute twice as many instances, twice unit resources may be required, and response time and a size of a resource may have a trade-off relationship. Accordingly, it is required to set an optimal number of instances in consideration of trade-off. In addition, it may be required to set an optimal number of instances in consideration of allowable response time. For example, for a case where the allowable response time is set to a relatively large value and a case where the allowable response time is set to a relatively small value, different settings for the optimal number of instances may be required for each. The electronic device 101 according to an embodiment may identify the optimal number of instances based on the number of user requests and the allowable response time, and this will be described later.

FIG. 2A illustrates a block diagram of an electronic device according to an embodiment.

Referring to FIG. 2A, an electronic device 101 may include a processor 120, memory 130, and/or a communication interface 190. The electronic device 101 may be a device for providing a service associated with at least one AI model. The electronic device 101 may be implemented as, for example, a single entity, or may be implemented as a plurality of entities. For example, the electronic device 101 may be implemented as a cloud server, and there is no limitation on an implementation form thereof. A resource 50 described in FIGS. 1B and 1D may mean, for example, a portion of the processor 120, the memory 130, and/or the communication interface 190. According to an embodiment, all or some of operations executed in the electronic device 101 may be executed in one or more external electronic devices among external electronic devices. For example, if the electronic device 101 needs to perform a function or service automatically or in response to a request from a user or another device, the electronic device 101 may request the one or more external electronic devices to perform at least a part of the function or the service instead of or in addition to executing the function or service by itself. The one or more external electronic devices receiving the request may execute at least a part of a requested function or service, or an additional function or service related to the request, and transfer a result of the execution to the electronic device 101. The electronic device 101 may process the result as it is or additionally, and provide it as at least a part of a response to the request. For this, for example, a cloud computing, distributed computing, mobile edge computing (MEC), or client-server computing technology may be used. The electronic device 101 may provide an ultra-low latency service using, for example, the distributed computing or the mobile edge computing. The electronic device 101 may be an intelligent server using machine learning and/or a neural network.

The processor 120 may execute, for example, software (e.g., a program) to control at least one other component (e.g., a hardware or software component) of the electronic device 101 coupled with the processor 120, and may perform various data processing or computation. According to an embodiment, as at least a part of the data processing or computation, the processor 120 may store a command or data received from another component (e.g., a communication module 190) in memory 130 (e.g., it may be volatile memory, but there is no limitation therefor), process a command or data stored in the volatile memory, and store resulting data in the memory 130 (e.g., it may be non-volatile memory, but there is no limitation therefor). According to an embodiment, the processor 120 may include a central processing unit (CPU), GPU, and/or a neural processing unit (NPU) which include circuitry, but there is no limitation therefor.

The memory 130 may store various data used by at least one component (e.g., the processor 120 and/or the communication interface 190) of the electronic device 101. The various data may include, for example, software (e.g., the program) and input data or output data for a command related thereto. The memory 130 may include the volatile memory and/or the non-volatile memory. The memory 130 may include a hard disk, ROM, RAM, cache memory, and/or a register, and there is no limitation on implementation thereof. Some of the above-mentioned entities (which may be, for example, but are not limited to, the register) may be implemented as a part of the processor 120, and there is no limitation on an implementation form thereof. In the memory 130, at least one AI model for executing an instance may also be stored.

The processor 120 may, for example, execute at least one instruction stored in the memory 130. The memory 130 may store the at least one instruction, and the at least one instruction may be executed by the processor 120. The at least one instruction, when executed by the processor 120, may cause the electronic device 101 to perform at least one operation. For example, as the at least one instruction is executed, at least one other component may be controlled, and/or various data processing or computation may be performed. As at least a part of the data processing or computation, the processor 120 may store a command or data received from another component in at least a part of the memory 130, process the command or data stored in the memory 130, and store result data in the memory 130. An operation being performed by the processor 120 may mean, for example, that the operation is performed by (or under the control of) a single entity (which may be, but is not limited to, a main processor) included in the processor 120. For example, one operation being performed may mean, for example, that a specific operation is performed by (or under the control of) a plurality of entities (e.g., a plurality of processors). For example, a plurality of operations being performed may mean, for example, that all of the plurality of operations are performed by (or under the control of) the single entity (which may be, but is not limited to, the main processor). For example, the plurality of operations being performed may mean that a part of the plurality of operations is performed by at least one entity, and the remaining part is performed by at least one other entity. For example, at least one instruction causing performance of one or more operations may be stored in one memory, or may be distributed and stored in each of a plurality of memories.

The communication interface 190 may support establishing a direct (e.g., wired) communication channel or a wireless communication channel between the electronic device 101 and the external electronic device 106a, 106b, 106c, ... , 106n and performing communication via the established communication channel. The communication interface 190 may include one or more communication processors that are operable independently from the processor 120 (e.g., the application processor (AP)) and supports a direct (e.g., wired) communication or a wireless communication, but there is no limitation therefor. According to an embodiment, the communication interface 190 may include a wired communication module (e.g., a local area network (LAN) communication module or a power line communication (PLC) module) which is based on ethernet. The communication interface 190 may include a wireless communication module, , but there is no limitation therefor. At least a part of the components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

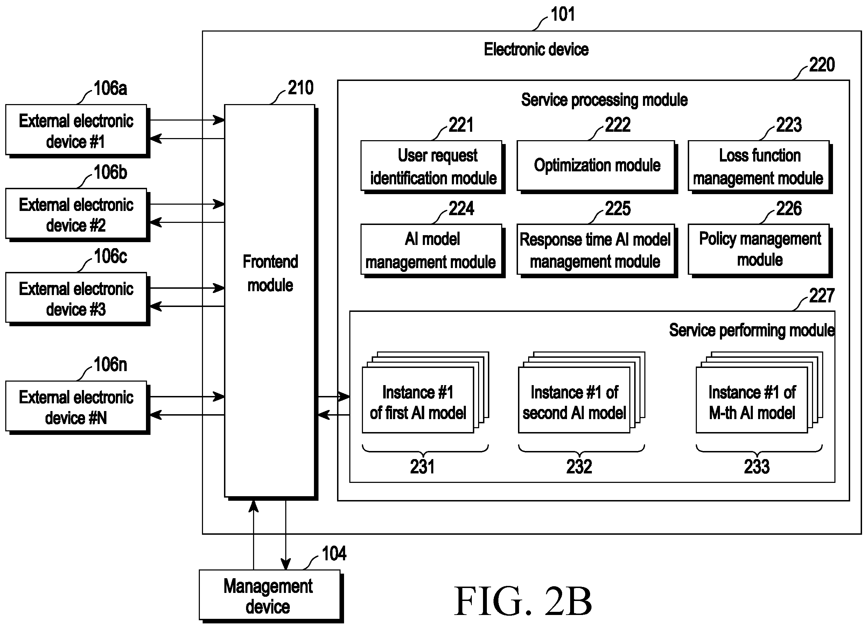

FIG. 2B illustrates a block diagram of an electronic device according to an embodiment.

According to an embodiment, an electronic device 101 may include and/or execute a frontend module 210 and/or a service processing module 220. The frontend module 210 and/or the service processing module 220 may be executed by, for example, a processor 120, or may be included as at least a part of the processor 120 or another entity. It may be understood that at least a part of operations performed by the frontend module 210 and/or the service processing module 220 in the disclosure are performed by, for example, the processor 120 and/or another entity under the control of the processor 120.

The frontend module 210 may perform, for example, at least one operation for data exchange with external electronic devices 106a, 106b, 106c, ..., 106n. For example, the frontend module 210 may provide data capable of configuring a UI for inputting a user input in the external electronic devices 106a, 106b, 106c, ..., 106n. For example, the frontend module 210 may be implemented as a web server. The external electronic devices 106a, 106b, 106c, ..., 106n may access the frontend module 210 based on, for example, a URL inputted in a web browsing application, or may access the frontend module 210 by executing an application, but there is no limitation therefor. The frontend module 210 may provide processing for a user request to the service processing module 220. The service processing module 220 may perform a service using the user request, and may be referred to as a backend module. The service processing module 220 may provide a response corresponding to the user request to the frontend module 210. The frontend module 210 may provide the response received from the service processing module 220 to the external electronic devices 106a, 106b, 106c, ..., 106n.

The service processing module 220 may include, for example, a user request identification module 221, an optimization module 222, a loss function management module 223, an AI model management module 224, a response time AI model management module 225, a policy management module 226, and/or a service performing module 227.

The user request identification module 221 may identify information associated with a user request provided from the external electronic devices 106a, 106b, 106c, ..., 106n. The information associated with the user request may be expressed as, for example, the number of user requests and/or a size of a user request during a certain period, but there is no limitation therefor. For example, the user request identification module 221 may count the number of user requests provided from the external electronic devices 106a, 106b, 106c, ..., 106n, and/or monitor the size of content (which may be, for example, but is not limited to, text and/or a graphic object) included in the user request, but there is no limitation on a kind of the information associated with the user request and/or an identification scheme.

The optimization module 222 may provide at least one optimal number of instances for each of at least one AI model associated with a service. The loss function management module 223 may store and/or manage (for example, which may include, but is not limited to, addition, deletion, and/or update) a loss function. The AI model management module 224 may store and/or manage (for example, which may include, but is not limited to, addition, deletion, and/or update) an AI model associated with the service. The response time AI model management module may store and/or manage (for example, which may include, but is not limited to, addition, deletion, and/or update) an AI model trained to provide response time by the service. The policy management module 226 may, for example, store and/or manage (for example, which may include, but is not limited to, addition, deletion, and/or update) allowable response time. For example, a management device 104 may identify (for example, receive or determine) at least one input for determining the allowable response time and provide the same to the electronic device 101. For example, a manager may input information about the allowable response time for the corresponding service into the management device 104, but this is exemplary and there is no limitation on a scheme in which the allowable response time is identified. A response time AI model may provide response time based on, for example, information associated with a user request and the number of instances. The loss function may provide a loss value based on, for example, the response time provided from the response time AI model and the allowable response time managed by the policy management module 226. The optimization module 222 may provide the optimal number of instances based on performing an optimization process (which may be, but is not limited to, a gradient descent method) for the loss value.

The service performing module 227 may execute, for example, each of at least one instance group 231, 232, 233 corresponding to the at least one AI model associated with the service. The service performing module 227 may execute, for example, the at least one instance group 231, 232, 233 corresponding to the at least one AI model according to the optimal number of instances provided by the optimization module 222. The service performing module 227 may process a user request based on the executed at least one instance group 231, 232, 233, and may provide a response according to a processing result to the external electronic devices 106a, 106b, 106c, ..., 106n via the frontend module 210. As described with reference to FIG. 1C, if there are a plurality of executed instances, the user request may be distributedly processed by a plurality of instances.

The electronic device 101 may determine an optimal number of instances for each of the at least one AI model associated with the service, based on information (e.g., number and/or size) associated with a provided user request identified in real time and a policy (e.g., allowable response time). As described above, the number of instances of an AI model may be in a trade-off relationship with the number and/or size of resources. The electronic device 101 may determine the optimal number of instances for each of the at least one AI model capable of processing the information (e.g., the number and/or size) associated with the user request according to the policy (e.g., the allowable response time). Accordingly, relatively rapid user request processing based on relatively few resources may be possible.

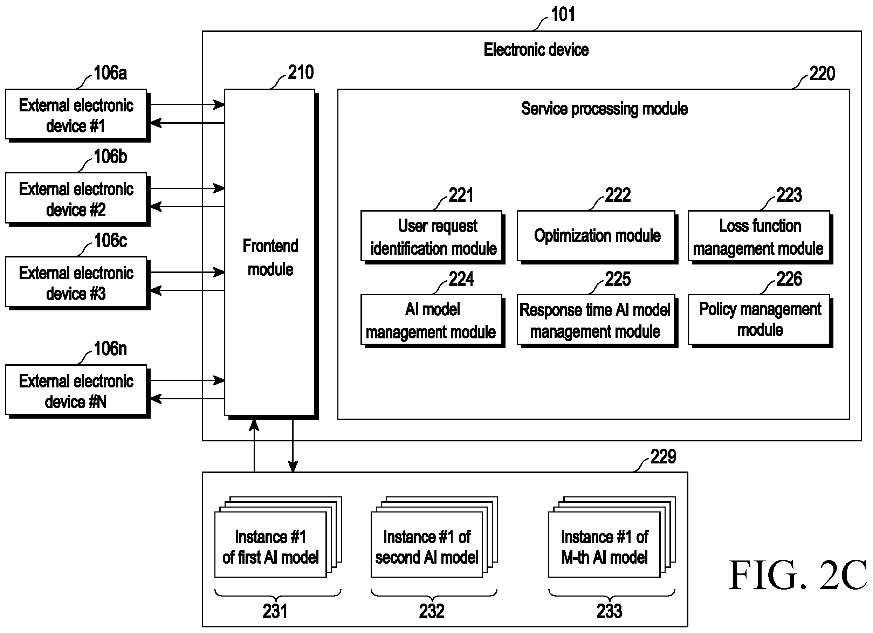

FIG. 2C illustrates a block diagram of an electronic device according to an embodiment.

According to an embodiment, an external service performing module 229 may not be included in an electronic device 101, or may be executed by a device other than the electronic device 101. For example, the electronic device 101 may provide a user request provided from external electronic devices 106a, 106b, 106c, ..., 106n to the external service performing module 229. Meanwhile, as described above, the electronic device 101 may determine an optimal number of instances of each of at least one AI model capable of processing information (e.g., number and/or size) associated with a user request according to a policy (e.g., allowable response time). The electronic device 101 may provide the determined optimal number of instances of each of the at least one AI model to the external service performing module 229. The external service performing module 229 may identify the optimal number of instances of each of the at least one AI model from the electronic device 101. The external service performing module 229 may execute at least one instance group 231, 232, 233 corresponding to the at least one AI model according to the optimal number of instances. The external service performing module 229 may process the user request based on the executed at least one instance group 231, 232, 233, and may provide a response according to a processing result to the external electronic devices 106a, 106b, 106c, ..., 106n via a frontend module 210. Meanwhile, as in FIG. 2C, it will be understood by those skilled in the art that relaying of the user request and response by the electronic device 101 is merely exemplary, and the user request and response may be directly transmitted/received between the external electronic devices 106a, 106b, 106c, ..., 106n and the external service performing module 229.

Meanwhile, as in FIG. 2B, it is exemplary that an instance of the whole of the at least one AI model is performed by the electronic device 101, or as in FIG. 2C, the instance of the whole of the at least one AI model is performed by an external entity (e.g., the external service performing module 229). Those skilled in the art will understand that, depending on implementation, an instance of a part of the at least one AI model may be executed by the electronic device 101, and an instance of the remaining part may be executed by the external entity (e.g., the external service performing module 229). For example, those skilled in the art will understand that a part of a plurality of instances corresponding to one AI model may be executed by the electronic device 101, and the remaining part may be executed by the external entity (e.g., the external service performing module 229).

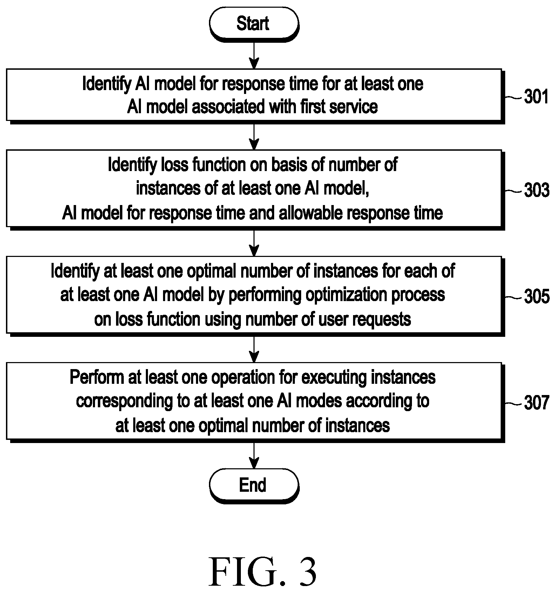

FIG. 3 is a flowchart for describing a method for executing an instance of an AI model according to an embodiment.

In the following embodiment, each operation may be performed sequentially, but is not necessarily performed sequentially. For example, an order of each operation may be changed, and at least two operations may be performed in parallel.

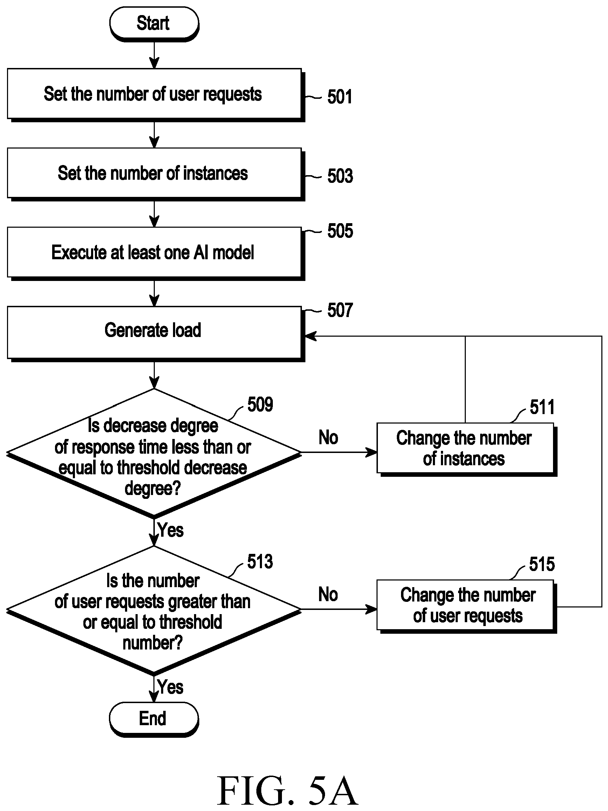

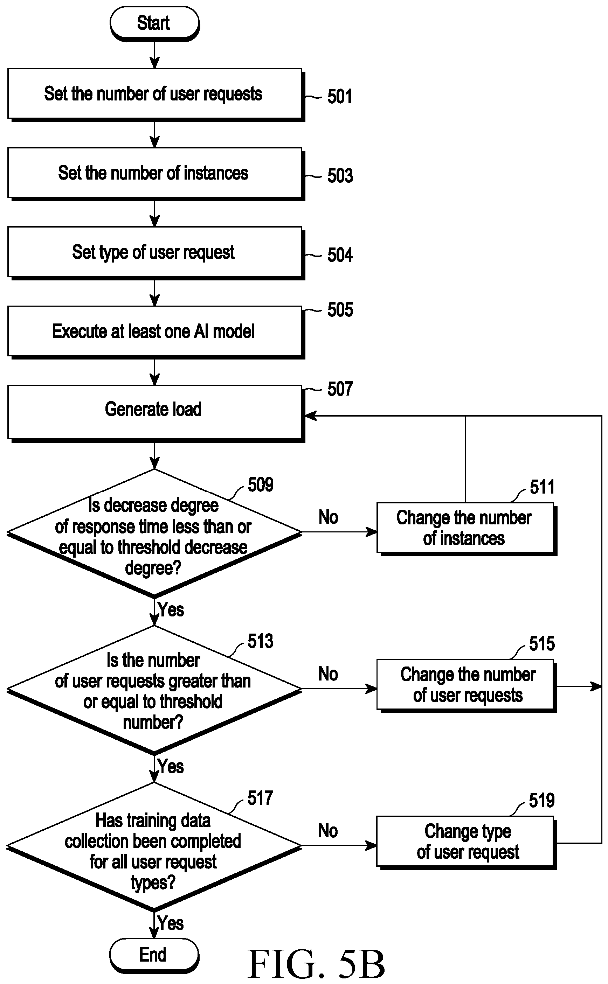

According to an embodiment, in operation 301, an electronic device 101 may identify a response time AI model for at least one AI model associated with a first service. The response time AI model may be configured to, for example, receive the number of user requests and the number of instances as an input value and output response time of the first service. For example, the response time of the first service may mean, but is not limited to, time required until a response is outputted based on a user request being processed by the at least one AI model associated with the first service if the user request is inputted for the first service, as described above. For example, a graph neural network (GNN) capable of effectively representing a workload of a graph form such as a fully-connected layer (FC) or an AI pipeline may be used as the response time AI model, but this is exemplary and there is no limitation on a kind of the model. The response time AI model may also be referred to as a response time function as it provides an the output value (e.g., the response time) corresponding to the input value (e.g., the number of user requests and the number of instances), and there is no limitation on a name thereof. The number of user requests may be, for example, the number of user requests identified per unit time, but this is exemplary and there is no limitation on an identifying scheme thereof. Those skilled in the art will understand that, depending on implementation, the number of user requests may be replaced with a total size of the user request, or both may be used. Generation of a training dataset for the response time AI model will be described with reference to FIGS. 5A and 5B. The electronic device 101 may generate, receive, and/or load a response time AI model for which training has been completed.

In operation 303, the electronic device 101 may identify a loss function based on the number of instances of the at least one AI model, the response time AI model, and allowable response time. The loss function may be configured to include, for example, a component which increases if the number of instances of an AI model increases, and a penalty component which has a relatively large value if response time is relatively longer than allowable response time, but there is no limitation on configuration thereof. The loss function may be set based on, for example, the number of instances of the at least one AI model, the response time AI model, and the allowable response time. Equation 1 is an example of the loss function.

<Equation 1> $Loss \left(\vec{r}, SLO\right) = {\sum }_{r ∈ \vec{r}} r + ρ \times ϕ \left(L\left(\vec{r}, \vec{w}\right), SLO\right)$

Equation 1 is merely an example to facilitate understanding, and an embodiment of the disclosure may not be limited thereto. For example, Equation 1 may be modified, applied, or expanded in various schemes.

In Equation 1, Loss may denote the loss function. *̅r̅*̅ may denote the number of instances of the at least one AI model. An order of *̅r̅*̅ may correspond to, for example, the number of the at least one AI model. If the number of the one at least one AI model is 1, *̅r̅*̅ may be expressed as a scalar. SLO may be, for example, allowable response time. The allowable response time may be, for example, a tail value of a distribution of response time, but this is exemplary and there is no limitation therefor. For example, the tail value may refer to response time at a point equal to or greater than a designated threshold percentage of a distribution of a plurality of response times. For example, if the threshold percentage is 95% and the tail value is about 100ms, it may mean that 95% of the plurality of response times needs to have a value of about 100ms or less. The allowable response time may be set, for example, by a manager, but there is no limitation on a setting scheme thereof. *̅w̅*̅ may be the number of user requests per unit time. For example, the number of user requests may be classified per type, and each component of *̅w̅*̅ may be the number of user requests per type. If the number of user requests is not managed per type, *̅w̅*̅ may also be a scalar. *L*(*̅r̅*̅, *̅w̅*̅) may be the response time function. As described above, the response time function *L*(*̅r̅*̅, *̅w̅*̅) may be configured to receive the number of instances (*̅r̅*̅) of the at least one AI model and the number of user requests (*̅w̅*̅) as an input value and output response time. A φ function in Equation 1 may be as in Equation 2.

<Equation 2> $ϕ \left(x, y\right) = max \left(0, x-y\right)$

Equation 2 is merely an example to facilitate understanding, and an embodiment of the disclosure may not be limited thereto. For example, Equation 2 may be modified, applied, or expanded in various schemes.

As described above, the φ function may be a function set to output a larger value between 0 and difference between two input values. ρ may be a constant and may correspond to, for example, a degree of penalty. Meanwhile, those skilled in the art will understand that a Max function as in Equation 2 is merely exemplary, and there is no limitation as long as it is a function which provides a relatively large value if response time is longer than allowable response time.

Referring to Equation 1, the loss function may include ${\sum }_{r ∈ \vec{r}} r$ which is a first component. The first component may be a sum of the numbers of instances (*̅r̅*̅) of the at least one AI model. For example, if the number of instances of a first AI model is 1 and the number of instances of a second AI model is 2, ${\sum }_{r ∈ \vec{r}} r$ which is the first component may be 3, which is a sum of 1 and 2. For example, as the number of instances (*̅r̅*̅) of the at least one AI model increases, the first component may increase.

For example, if the response time is relatively larger than the allowable response time, *ρ* × *ϕ*(*L*(*̅r̅*̅, *̅w̅*̅), *SLO*), which is a second component, may have a relatively large value. If the response time is relatively smaller than the allowable response time, the second component may have a value of 0, and accordingly, the second component may be referred to as a penalty component. It may be understood that as ρ is set to be relatively larger, a weight for the penalty component is set to be relatively larger.

In operation 305, the electronic device 101 may identify at least one optimal number of instances for each of the at least one AI model by performing an optimization procedure on the loss function using the number of user requests. For example, the electronic device 101 may input the number of user requests into the loss function such as Equation 1 and identify an output value of the loss function. The electronic device 101 may perform the optimization procedure based on the output value of the loss function, and accordingly identify the at least one optimal number of instances for each of the at least one AI model. For example, the electronic device 101 may perform a gradient descent method as the optimization procedure, but this is exemplary and there is no limitation on the optimization procedure. For example, the electronic device 101 may identify *̅r̅*̅ in the next step based on a partial derivative result of the loss function for *̅r̅*̅, a value of *̅r̅*̅ at the current step, and a step size. The electronic device 101 may perform the optimization procedure until a difference between an output value of the loss function at the current step and an output value at the previous step is within a threshold difference, and accordingly identify an optimal value for *̅r̅*̅, and this may be referred to as the optimal number of instances. For example, the optimization process may be as in Equation 3.

<Equation 3> $\vec{r} \left(n+1\right) = \vec{r} \left(n\right) + ∇ Loss \left(\vec{r}\left(n\right), SLO\right) \times α$

Equation 3 is merely an example to assist understanding, and an embodiment of the disclosure may not be limited thereto. For example, Equation 3 may be modified, applied, or expanded in various schemes.

In Equation 3, r̅(n + 1) may be a vector corresponding to the next step, and r̅(n) may be a vector corresponding to the current step. α may be the step size, and ∇Loss (r̅(n), SLO) may be a result of inputting information about the current step into the partial derivative result of the loss function. If a difference between the output value of the loss function at the current step and the output value of the loss function at the previous step is within the threshold difference, the electronic device 101 may identify the output value of the loss function at the current step as an optimal value, and this may be referred to as the optimal number of instances. There is no limitation on an initial value of *̅r̅*̅. For example, the loss function may be a convex function, and a function in which one global minimum exists, so there may be no limitation on the initial value.

In operation 307, the electronic device 101 may perform at least one operation for executing an instance corresponding to the at least one AI model according to the at least one optimal number of instances. For example, if the electronic device 101 directly executes the instance, the electronic device 101 may execute the instance corresponding to the at least one AI model according to the at least one optimal number of instances. Alternatively, the electronic device 101 may provide information about the optimal number of instances to an external service performing module 229, and accordingly, the external service performing module 229 may execute the instance corresponding to the at least one AI model according to the at least one optimal number of instances. For example, if a service is running in Kubernetes, the electronic device 101 may command an application programming interface (API) server of Kubernetes, thereby the instance corresponding to the at least one AI model may be executed according to the at least one optimal number of instances, but there is no limitation thereto.

The electronic device 101 may, for example, identify the optimal number of instances periodically or identify the optimal number of instances based on an event such as an increase or decrease in the number of user requests.

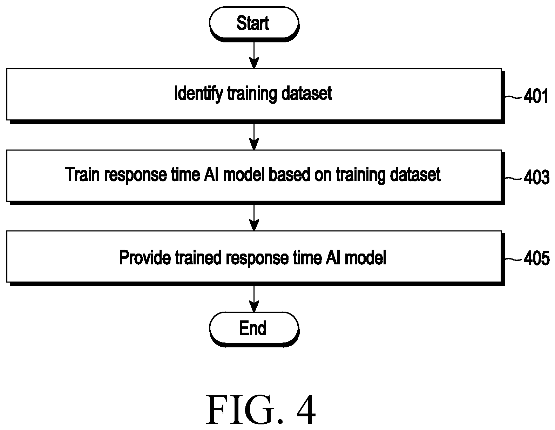

FIG. 4 is a flowchart for describing a method for training a response-time AI model according to an embodiment.

In the following embodiment, each operation may be performed sequentially, but is not necessarily performed sequentially. For example, an order of each operation may be changed, and at least two operations may be performed in parallel.

According to an embodiment, in operation 401, the electronic device 101 may identify a training dataset. In operation 403, the electronic device 101 may train a response time AI model based on the training dataset. In operation 405, the electronic device 101 may provide a trained response time AI model. For example, as described above, the response time AI model may be set to receive the number of instances of the at least one AI model and the number of user requests as an input value, and to output response time. For example, each training dataset may include the number of instances of the at least one AI model and the number of user requests as an input value, and include response time as an output value. A method for generating the training dataset will be described with reference to FIGS. 5A and 5B. As described above, for example, a fully connected neural network or a graph neural network may be used as the response time AI model, but this is exemplary and there is no limitation on a kind of the model thereof. The electronic device 101 may train the response time AI model via, for example, supervised learning on the training dataset, but there is no limitation on a training scheme therefor. For example, the electronic device 101 may perform training based on another loss function for the response time AI model using the training dataset. If a loss value according to the other loss function is equal to or less than a threshold loss value, it may be identified that training has been sufficiently performed, but there is no limitation thereto.

FIG. 5A is a flowchart for describing a method for generating a training dataset of a response time AI model according to an embodiment.

In the following embodiment, each operation may be performed sequentially, but is not necessarily performed sequentially. For example, an order of each operation may be changed, and at least two operations may be performed in parallel.

According to an embodiment, in operation 501, an electronic device 101 may set the number of user requests. There is no limitation on an initial value of the number of user requests. In operation 503, the electronic device 101 may set the number of instances corresponding to each of at least one AI model. There is no limitation on the initial value of the number of instances. In operation 505, the electronic device 101 may execute the at least one AI model according to the set number of instances. For example, the electronic device 101 may execute the at least one AI model according to the set number of instances based on AI model-related information, driving engine program information, resource information per instance, and/or resource-related information, but there is no limitation thereto. The AI model-related information may include information about an AI pipeline constituting a service and/or the at least one AI model. For example, the information about the at least one AI model may include a parameter of each AI model, but there is no limitation thereto. The information about the pipeline may include information about an order in which each AI model constitutes the service, but there is no limitation thereto. The information about the at least one AI model may be provided by an AI model developer, and/or information about a pipeline structure may be provided by a developer of an application using a corresponding AI model, but there is no limitation on a providing entity thereof. The driving engine program information may include a programming code capable of driving the at least one AI model and/or the pipeline. For example, if the pipeline structure is implemented, a GPU-related library is called, thereby an AI model may be driven using a GPU resource, and the driving engine program information may include the corresponding code. The code may be provided by an application developer, but there is no limitation on a providing entity thereof. The resource information per instance refers to an amount of a resource (for example, it may be the number of GPUs, but there is no limitation thereto) to be used by each AI model at one time. For example, if the number of GPUs per instance is one, one GPU may be required to execute one instance of the AI model. The resource information per instance may be provided by, for example, a device of an infrastructure operator, but there is no limitation on a providing entity thereof. The resource-related information is information about a resource (e.g., a GPU) used by the AI model and may include, for example, a manufacturer and/or information of a GPU model. The resource information per instance may be determined by the resource-related information. For example, if a processing capacity of the GPU is relatively large, the number of GPUs per instance may decrease. The resource-related information may be provided by, for example, the device of the AI infrastructure operator, but there is no limitation on a providing entity thereof.

An electronic device 101 may, in operation 507, generate a load according to a set number of user requests. Here, the load may refer to a user request. The electronic device 101 may generate the load, for example, based on a user request format. The user request format may refer to a format for an input value to a service based on at least one AI model. For example, the user request format may follow a hypertext transfer protocol (HTTP) or google remote procedure call (gRPC) protocol format, but this is exemplary and there is no limitation thereto. The user request format may include, for example, information about at least one parameter which may be used for an input to the service. The user request format may be provided by a developer of an application using the AI model, but there is no limitation on a providing entity thereof. The electronic device 101 may input the generated load to the at least one AI model, and may identify training data based on an executing result of the at least one AI model. For example, the electronic device 101 may identify response time required to process the generated load. For example, the training data may include, as an input value, the number of user requests and the number of instances corresponding to each of the at least one AI model, and may include the response time as an output value.

The electronic device 101, in operation 509, may identify whether a decrease degree of response time is less than or equal to a threshold decrease degree. The threshold decrease degree may be set, for example, to a value at which decease in response time resulting from a change in the number of instances is insignificant, and there is no limitation on a criterion for setting the threshold decrease degree. If the decrease degree of the response time is not less than or equal to the threshold decrease degree (Operation 509-No), the electronic device 101 may change (for example, increase, but there is no limitation) the number of instances in operation 511. After changing the number of instances, the electronic device 101 may generate a load and further identify training data. The electronic device 101 may collect training data while changing the number of instances until, for example, the decrease degree of the response time becomes less than or equal to the threshold decrease degree. If the decrease degree of the response time is less than or equal to the threshold decrease degree (Operation 509-Yes), the electronic device 101 may, in operation 513, identify whether the number of user requests is greater than or equal to a threshold number. The threshold number may be set based on a usage history of the service, but there is no limitation thereto. If the number of user requests is not greater than or equal to the threshold number (Operation 513-No), the electronic device 101 may change (for example, increase, but there is no limitation) the number of user requests in operation 515. After changing the number of user requests, the electronic device 101 may further perform generation of a load. The electronic device 101 may collect training data while changing the number of user requests until, for example, the number of user requests becomes greater than or equal to the threshold number. Via the above-described process, a training dataset may be collected, and the electronic device 101 may train a response time AI model as in FIG. 4 based on the collected training dataset. Meanwhile, those skilled in the art will understand that a part of the collected training dataset may be used for training, and the remaining part may be used for validation.

The electronic device 101 may train the response time AI model according to the training dataset in a manner such as that illustrated in FIG. 5A. For example, as described in Equation 1, *̅w̅*̅ inputted to the response time AI model may be expressed as a scalar.

FIG. 5B is a flowchart for describing a method for generating a training data set for a response time AI model according to an embodiment.

In the following embodiment, each operation may be performed sequentially, but is not necessarily performed sequentially. For example, an order of each operation may be changed, and at least two operations may be performed in parallel.

According to an embodiment, an electronic device 101 may set the number of user requests in operation 501. There is no limitation on an initial value of the number of user requests. In operation 503, the electronic device 101 may set the number of instances corresponding to each of at least one AI model. There is no limitation on an initial value of the number of instances. In operation 504, the electronic device 101 may set a type of a user request. There is no limitation on an initial type of a type of the user request. In operation 505, the electronic device 101 may execute the at least one AI model according to the set number of instances. In operation 507, the electronic device 101 may generate a load according to the set number of user requests. In operation 509, the electronic device 101 may identify whether a decrease degree of response time is less than or equal to a threshold decrease degree. The threshold decrease degree may be set, for example, to a value at which a decrease in response time according to a change in the number of instances is insignificant, and there is no limitation on a criterion for setting the threshold decrease degree. If the decrease degree of the response time is not less than or equal to the threshold decrease degree (Operation 509-NO), the electronic device 101 may change (for example, increase, but there is no limitation) the number of instances in operation 511. After changing the number of instances, the electronic device 101 may generate a load and further identify training data. The electronic device 101 may collect training data while changing the number of instances until, for example, the decrease degree of the response time becomes less than or equal to the threshold decrease degree. If the decrease degree of the response time is less than or equal to the threshold decrease degree (Operation 509-Yes), the electronic device 101 may, in operation 513, identify whether the number of user requests is greater than or equal to a threshold number. The threshold number may be set based on a usage history of the service, but there is no limitation thereto. If the number of user requests is not greater than or equal to the threshold number (Operation 513-No), the electronic device 101 may change (for example, increase, but there is no limitation) the number of user requests in operation 515. After changing the number of user requests, the electronic device 101 may further perform generation of a load. The electronic device 101 may collect training data while changing the number of user requests until, for example, the number of user requests becomes greater than or equal to the threshold number. If the number of user requests is greater than or equal to the threshold number (Operation 513-YES), the electronic device 101 may identify whether training data collection has been completed for all user request types in operation 517. If the training data collection has not been completed for all user request types (Operation 517-NO), the electronic device 101 may change the type of the user request in operation 519. After changing the type of the user request, the electronic device 101 may further perform load generation. For example, the electronic device 101 may collect training data while changing the type of the user request until training data collection is completed for all user request types.

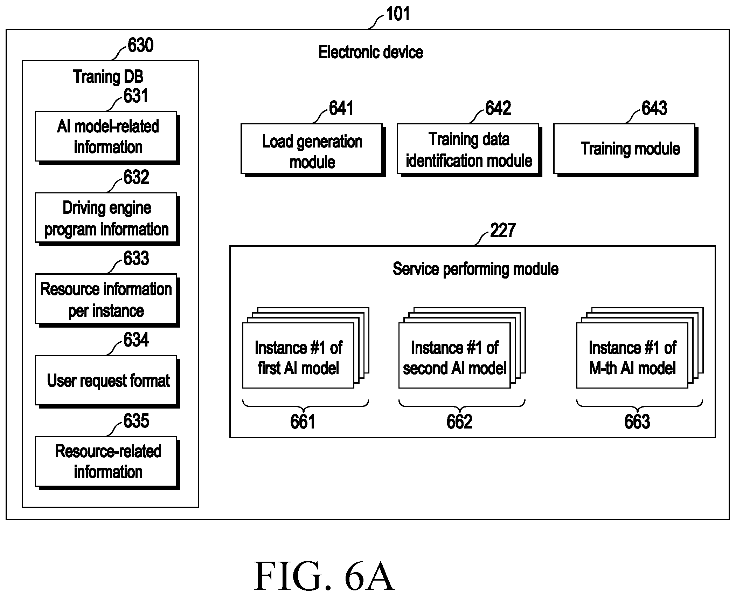

FIG. 6A illustrates a block diagram of an electronic device according to an embodiment.

According to an embodiment, an electronic device 101 may include and/or execute a load generation module 641, a training data identification module 642, a training module 643, and/or a service performing module 227. The load generation module 641, the training data identification module 642, the training module 643, and/or the service performing module 227 may be, for example, executed by a processor 120, or included as at least a part of the processor 120 or another entity. It may be understood that at least some of operations performed by the load generation module 641, the training data identification module 642, the training module 643, and/or the service performing module 227 in the disclosure are performed, for example, by the processor 120 and/or another entity under the control of the processor 120. The electronic device 101 may include a training DB 630.

The training DB 630 may be stored in (or included in), for example, memory 130, but there is no limitation therefor. The training DB 630 may include AI model-related information 631, driving engine program information 632, resource information per instance 633, a user request format 634, and/or resource-related information 635. The AI model-related information 631 may include information about an AI pipeline constituting a service and/or at least one AI model. For example, the information about the at least one AI model may include a parameter of each AI model, but there is no limitation thereto. The information about the pipeline may include information about an order in which each AI model constitutes the service, but there is no limitation thereto. The information about the at least one AI model may be provided by an AI model developer, and/or information about a pipeline structure may be provided by a developer of an application using a corresponding AI model, but there is no limitation on a providing entity thereof. The AI model developer may be, for example, an entity which develops and/or trains an AI model, but there is no limitation therefor. The developer of the application may be, for example, an entity which develops the application using an AI model, for example, the AI model developer may develop a chatbot, such as a generative AI model, using a language model developed by the AI model developer, but there is no limitation therefor.

The driving engine program information 632 may include a programming code capable of driving the at least one AI model and/or the pipeline. For example, if the pipeline structure is implemented, a GPU-related library is called, thereby an AI model may be driven using a GPU resource, and the driving engine program information 632 may include the corresponding code. The code may be provided by an application developer, but there is no limitation on a providing entity thereof. The resource information per instance 633 refers to an amount of a resource (for example, it may be the number of GPUs, but there is no limitation thereto) to be used by each AI model at one time. The resource information per instance 633 may be provided by, for example, a device of an infrastructure operator, but there is no limitation on a providing entity thereof. The device of the infrastructure operator may be, for example, an entity which manages and operates the infrastructure. The device of the infrastructure operator may perform tasks of periodically monitoring the infrastructure and responding when a problem occurs, but there is no limitation therefor. The device of the infrastructure operator may perform infrastructure management based on requirements of a device of a service operator and/or deployment of an application developed by the application developer. The device of the service operator may be an entity which operates and/or manages an AI model-based application. The device of the service operator may operate the AI model-based application under operation-related requirements, and may, for example, perform a task of an initial response when a failure occurs.

The user request format 634 may refer to a format for an input value to a service based on at least one AI model. For example, the user request format 634 follow an HTTP or gRPC protocol format, but this is exemplary and there is no limitation thereto. The user request format 634 may include, for example, information about at least one parameter which may be used for an input to the service. The user request format 634 may be provided by a developer of an application using the AI model, but there is no limitation on a providing entity thereof.

The resource-related information 635 is information about a resource (e.g., a GPU) used by the AI model and may include, for example, a manufacturer and/or information of a GPU model. The resource information per instance may be determined by the resource-related information 635. For example, if a processing capacity of the GPU is relatively large, the number of GPUs per instance may decrease. The resource-related information 635 may be provided by, for example, the device of the AI infrastructure operator, but there is no limitation on a providing entity thereof.

The load generation module 641 may, for example, generate a load according to a set number of user requests. As described above, the load may refer to a user request. For example, the load generation module 641 may generate the load based on the user request format 634.

The service performing module 227 may execute instances 661, 662, 663 corresponding to the at least one AI model. The service performing module 227 may execute the instances 661, 662, 663 based on, for example, the AI model-related information 631, driving engine program information 632, the resource information per instance 633, and/or the resource-related information 635, but there is no limitation therefor. The service performing module 227 may process a user request provided from the load generation module 641 by using the instances 661, 662, 663. The training data identification module 642 may identify response time taken to process the user request. For example, the training data identification module 642 may identify the response time based on a tail value of response times at which responses corresponding to a plurality of user requests are provided. For example, the training data identification module 642 may identify a tail value corresponding to a lower approximately 95% of a plurality of response times as the response time, but there is no limitation on a scheme of identifying the response time. The training data identification module 642 may identify the number of instances and the number of user requests as an input value, and identify response time corresponding to this as an output value. As described with reference to FIGS. 5A and 5B, a plurality of pieces of training data may be provided as the number of instances, the number of user requests, and/or a user request type are changed, and accordingly, a training dataset may be provided. The training module 643 may train a response time AI model based on the training dataset, for example, as described in FIG. 4.

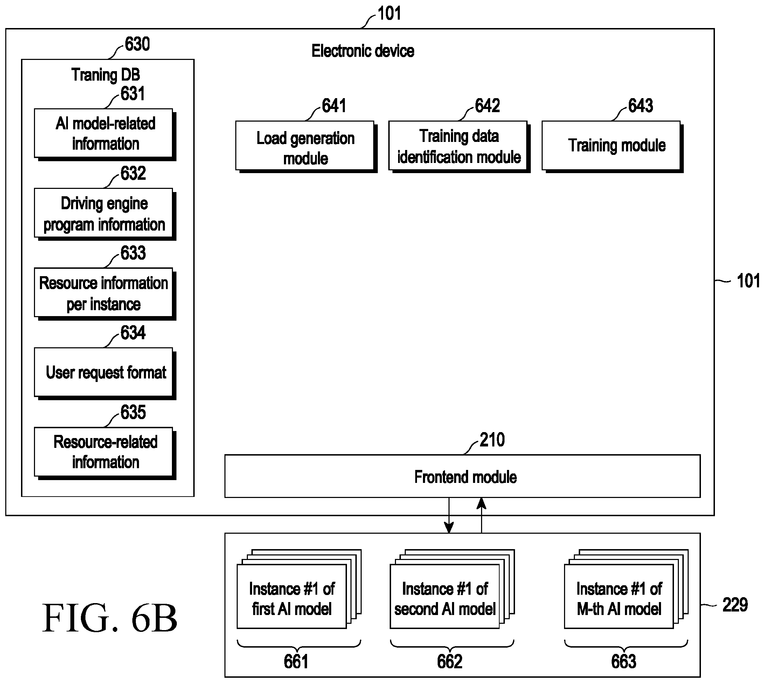

FIG. 6B illustrates a block diagram of an electronic device according to an embodiment.

According to an embodiment, an external service performing module 229 may not be included in an electronic device 101, or may be executed by another device other than the electronic device 101. For example, the electronic device 101 may provide an instance execution request according to a set number of instances to the external service performing module 229. The external service performing module 229 may execute instances 661, 662, 663 according to a received set number of instances. The electronic device 101 may provide a user request provided by a load generation module 641 to the external service performing module 229. The external service performing module 229 may process the user request based on the instances 661, 662, 663, and provide response time corresponding to each user request to the electronic device 101. The training data identification module 642 may identify the number of instances and the number of user requests as an input value, and identify the response time as an output value. Meanwhile, it is exemplary that an instance of all of at least one AI model is performed by the electronic device 101 as in FIG. 6A, or that the instance of all of the at least one AI model is performed by an external entity (e.g., the external service performing module 229) as in FIG. 6B. Those skilled in the art will understand that, depending on implementation, an instance of some of the at least one AI model may be executed by the electronic device 101 and an instance of the remaining part may be executed by the external entity (e.g., the external service performing module 229). For example, those skilled in the art will understand that some of a plurality of instances corresponding to one AI model may be executed by the electronic device 101 and the remaining part may be executed by the external entity (e.g., the external service performing module 229).

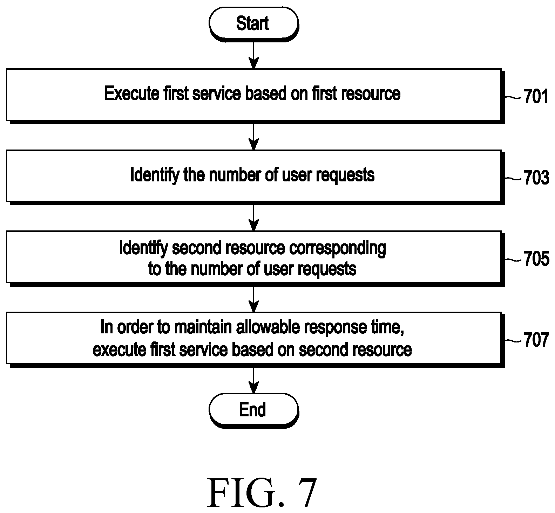

FIG. 7 is a flowchart for describing a service executing method according to an embodiment.

In the following embodiment, each operation may be performed sequentially, but is not necessarily performed sequentially. For example, an order of each operation may be changed, and at least two operations may be performed in parallel.

According to an embodiment, in operation 701, an electronic device 101 may execute a first service based on a first resource. For example, the electronic device 101 may identify an optimal number of instances of each of at least one AI model associated with the first service, based on the number of user requests and allowable response time. The electronic device 101 may execute an instance of each of the at least one AI model according to the optimal number of instances, and accordingly, the first service may be executed based on the first resource corresponding to the optimal number of instances. In operation 703, the electronic device 101 may newly identify the number of user requests. In operation 705, the electronic device 101 may identify a second resource corresponding to the newly identified number of user requests. For example, the electronic device 101 may identify a new optimal number of instances of each of the at least one AI model associated with the first service, based on the newly identified number of user requests and the allowable response time. The electronic device 101 may identify the second resource for executing the instance of each of the at least one AI model according to the new optimal number of instances. For example, it is assumed that the second resource is larger than the first resource. In operation 707, the electronic device 101 may execute the first service based on the second resource in order to maintain the allowable response time. For example, in order to maintain the allowable response time, the electronic device 101 may increase a resource used for the first service from the first resource to the second resource.

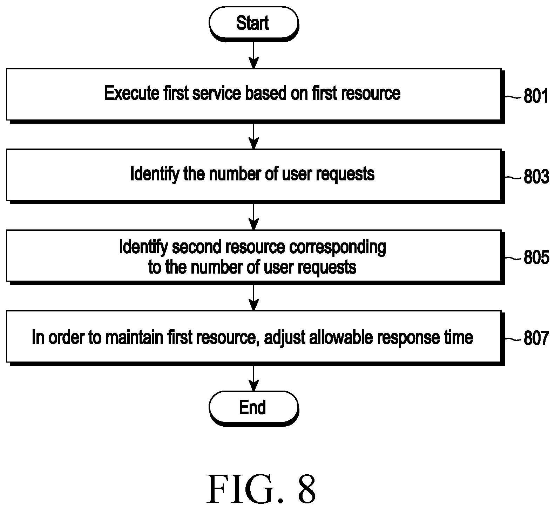

FIG. 8 is a flowchart for describing a service executing method according to an embodiment.

In the following embodiment, each operation may be performed sequentially, but is not necessarily performed sequentially. For example, an order of each operation may be changed, and at least two operations may be performed in parallel.

According to an embodiment, in operation 801, an electronic device 101 may execute a first service based on a first resource. For example, the electronic device 101 may identify an optimal number of instances of each of at least one AI model associated with the first service, based on the number of user requests and allowable response time. The electronic device 101 may execute an instance of each of the at least one AI model according to the optimal number of instances, and accordingly, the first service may be executed based on the first resource corresponding to the optimal number of instances. In operation 803, the electronic device 101 may newly identify the number of user requests. In operation 805, the electronic device 101 may identify a second resource corresponding to the newly identified number of user requests. For example, the electronic device 101 may identify a new optimal number of instances of each of the at least one AI model associated with the first service, based on the newly identified number of user requests and the allowable response time. The electronic device 101 may identify the second resource for executing the instance of each of the at least one AI model according to the new optimal number of instances. For example, it is assumed that the second resource is larger than the first resource. In operation 807, the electronic device 101 may adjust (for example, increase) the allowable response time in order to maintain a resource being used. For example, the electronic device 101 may identify the allowable response time for processing the newly identified number of user requests while maintaining the first resource. For example, the electronic device 101 may output the identified allowable response time so that a manager may recognize the identified allowable response time, and if it is identified that the identified allowable response time is tolerable, the manager may manipulate the electronic device 101 to maintain the resource. Alternatively, the manager may input the allowable response time, which is tolerable, to the electronic device (101). In this case, the electronic device 101 may adjust SLO in Equation 1 to the inputted value, and identify a resource based on the optimal number of instances according to this. The electronic device 101 may execute the first service by using a resource corresponding to the identified optimal number of instances.

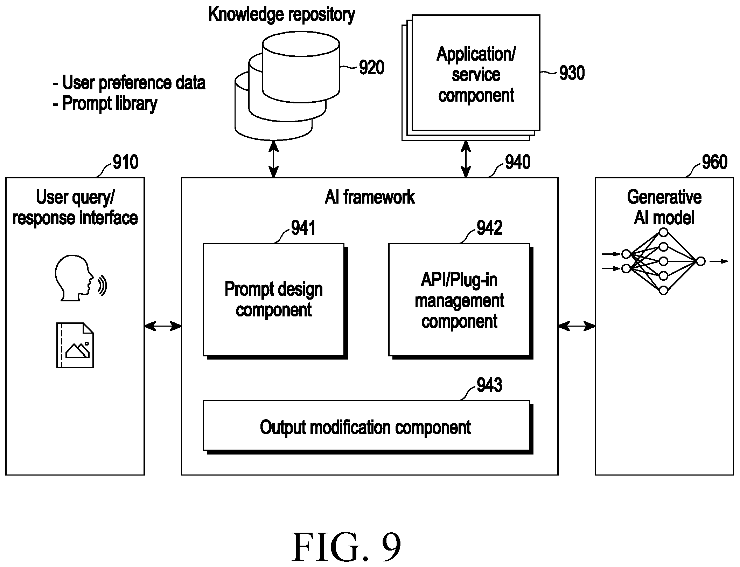

FIG. 9 is a diagram for describing a generative artificial intelligence system according to an embodiment.

According to an embodiment, a user query/response interface 910 may receive a user input. The user input may be in a form such as natural language, an image, and/or a video, but there is no limitation therefor. In addition, upon transmission of user input, context information may also be transmitted together. The context information may include various pieces of additional information at a time point of the user input. For example, the additional information may include information about an application currently being used by a user, location information of the user, and/or the like. In addition, the user input may be in a mixed form of the above-described natural language, image, sound, and context information. In addition, the user input may be in a non-natural language form such as selecting a menu, and/or the like. The user query/response interface 910 may output a result of a generative artificial intelligence system to the user. The output may be provided in a form of a natural language or a specific content, or may be provided in a form of an action requested by the user, and/or the like. The user query/response interface 910 may output a result of a generative artificial intelligence system to the user. The output may be provided in a form of a natural language or a specific content, or may be provided in a form of an action requested by the user, and/or the like.

An AI framework 940 may receive the user input, and coordinate and control respective components required to perform an intention of the user based on a query of the user.

The user input received from the user query/response interface 910 may be transmitted to a prompt design component 941. The prompt design component 941 may be used for generating a prompt suitable for inputting the user input to a large languae model: LLM) or a large multimodal model (LMM). The prompt design component 941 may be an AI component which uses a machine learning algorithm or a neural network to develop a better prompt over time. The prompt design component 941 may generate a prompt by accessing a knowledge component including user preference data, a prompt library, and a prompt example based on the user input, and transfer the generated prompt to the LLM or the LMM.

An API/Plug-in management component 942 may serve to communicate with external information when there is a request for additional information upon transferring the user input as an input of a generative model. The API/Plug-in management component 942 may establish a channel capable of communicating with the outside of an AI interface via an API, and allow access to various data sources (e.g., a knowledge repository (920)) via the established channel. In addition, when an action which finally performs the user input, rather than an intermediate result, needs to be performed in an application or a service, the API/Plug-in management component 942 may request the corresponding action from an application/service component 930 via the API. Information obtained from the outside may be used for generating a prompt in the prompt design component 941 together with the user input, or may be transferred as the input of the generative model.

An output modification component 943 (which may also be named a refiner component) may finely tune a result outputted from the generative model. For example, the output modification component 943 may verify whether the content generated via the LLM and/or the LMM is irrelevant, contains biased content, or contains harmful content. In addition, the output modification component 943 may determine to what extent the generated content matches a result desired by the user, and perform a corresponding process when an additional process is required. The output modification component 943 may additionally configure a hint for avoiding an undesired output and provide the hint to the user.

A generative AI model 960 may generally refer to an artificial intelligence neural network which generates data of a new form by depending on user input information. The generative AI model 960 may include a model for generating an image and/or a model for generating a language. Representative examples of the model for generating the image are a generative adversarial network (GAN) and a variational auto encoder (VAE), and a Diffusion-based generative model using the VAE and Transformer structure may be taken as an example. The model for generating the language is a model trained to output a statistically most appropriate output value based on an input value, and models such as CHAT-GPT 3 and CHAT-GPT 4 may be taken as example. In addition, there are large multimodal models (LMMs) capable of recognizing various forms of data inputs such as text, images, and voices and generating new data corresponding to these.

According to an embodiment, a method for executing an instance of at least one AI model may be provided. The method may comprise identifying a response time AI model for at least one AI model associated with a first service. The response time AI model may be configured to receive a number of user requests for the first service and a number of instances of each of the at least one AI model as an input value to output response time. The method may comprise identifying a loss function configured based on a number of instances of the at least one AI model, the response time AI model, and allowable response time. The method may comprise identifying at least one optimal number of instances for each of the at least one AI model by performing an optimization procedure for the loss function using the number of the user requests for the first service. The method may comprise performing at least one operation for executing instances for the at least one AI model according to the at least one optimal number of instances.

According to an embodiment, the loss function may comprise a component based on a difference between a result of inputting the number of the user requests in the response time AI model and the allowable response time.

According to an embodiment, the loss function may comprise the component based on the difference and a sum of the number of the instances of the at least one AI model.

According to an embodiment, the loss function may be based on Equation 1, and Equation 1 may be $Loss \left(\vec{r}, SLO\right) = {\sum }_{r ∈ \vec{r}} r + ρ \times ϕ \left(L\left(\vec{r}, \vec{w}\right), SLO\right)$. The *̅r̅*̅ may be the number of instances of the at least one AI model. The SLO may be the allowable response time. The *̅w̅*̅ may be the number of user requests per type. The L(*̅r̅*̅, *̅w̅*̅) may be the response time function. The ${\sum }_{r ∈ \vec{r}} r$ may be the sum of the number of the instances of the at least one AI model. The function may be the component based on the difference and based on Equation 2, and Equation 2 may be *ϕ*(x, y) = max (0, x - y). The *ρ* may be a constant.

According to an embodiment, identifying the at least one optimal number of instances for each of the at least one AI model by performing the optimization procedure for the loss function may comprise identifying the at least one optimal number of instances for each of the at least one AI model by performing the optimization procedure on the loss function with respect to the number of instances of the at least one AI model.

According to an embodiment, the optimization procedure may comprise a gradient descent method.

According to an embodiment, performing the at least one operation for executing the instances for the at least one AI model according to the at least one optimal number of instances may comprise executing the instances for the at least one AI model according to the at least one optimal number of instances.

According to an embodiment, performing the at least one operation for executing the instances for the at least one AI model according to the at least one optimal number of instances may comprise requesting an external electronic device to execute the instances for the at least one AI model according to the at least one optimal number of instances.

According to an embodiment, the method may further comprise receiving a command for setting the allowable response time.

According to an embodiment, a storage medium storing at least one instruction readable by a computer may be provided. The at least one instruction, when executed by at least a part of at least one processor (120) of an electronic device, may cause the electronic device to perform at least one operation. The at least one operation may comprise identifying a response time AI model for at least one AI model associated with a first service. The response time AI model may be configured to receive a number of user requests for the first service and a number of instances of each of the at least one AI model as an input value to output response time. The at least one operation may comprise identifying a loss function configured based on a number of instances of the at least one AI model, the response time AI model, and allowable response time. The at least one operation may comprise identifying at least one optimal number of instances for each of the at least one AI model by performing an optimization procedure for the loss function using the number of the user requests for the first service. The at least one operation may comprise performing at least one operation for executing instances for the at least one AI model according to the at least one optimal number of instances.

According to an embodiment, the loss function may comprise a component based on a difference between a result of inputting the number of the user requests in the response time AI model and the allowable response time.

According to an embodiment, the loss function may comprise the component based on the difference and a sum of the number of the instances of the at least one AI model.

According to an embodiment, the loss function may be based on Equation 1, and Equation 1 may be $Loss \left(\vec{r}, SLO\right) = {\sum }_{r ∈ \vec{r}} r + ρ \times ϕ \left(L\left(\vec{r}, \vec{w}\right), SLO\right)$. The *̅r̅*̅ may be the number of instances of the at least one AI model. The SLO may be the allowable response time. The *̅w̅*̅ may be the number of user requests per type. The *L*(*̅r̅*̅, *̅w̅*̅) may be the response time function. The ${\sum }_{r ∈ \vec{r}} r$ may be the sum of the number of the instances of the at least one AI model. The *ϕ* function may be the component based on the difference and based on Equation 2, and Equation 2 may be *ϕ*(x, y) = max (0, x - y). The *ρ* may be a constant.

According to an embodiment, identifying the at least one optimal number of instances for each of the at least one AI model by performing the optimization procedure for the loss function may comprise identifying the at least one optimal number of instances for each of the at least one AI model by performing the optimization procedure on the loss function with respect to the number of instances of the at least one AI model.

According to an embodiment, the optimization procedure may comprise a gradient descent method.

According to an embodiment, performing the at least one operation for executing the instances for the at least one AI model according to the at least one optimal number of instances may comprise executing the instances for the at least one AI model according to the at least one optimal number of instances.

According to an embodiment, performing the at least one operation for executing the instances for the at least one AI model according to the at least one optimal number of instances may comprise requesting an external electronic device to execute the instances for the at least one AI model according to the at least one optimal number of instances.

According to an embodiment, the at least one operation may further comprise receiving a command for setting the allowable response time.

According to an embodiment, an electronic device may comprise at least one processor (120). The electronic device may comprise memory (130) storing at least one instruction. The at least one instruction, when executed by at least a part of the at least one processor (120), may cause the electronic device to perform at least one operation. The at least one operation may comprise identifying a response time AI model for at least one AI model associated with a first service. The response time AI model may be configured to receive a number of user requests for the first service and a number of instances of each of the at least one AI model as an input value to output response time. The at least one operation may comprise identifying a loss function configured based on a number of instances of the at least one AI model, the response time AI model, and allowable response time. The at least one operation may comprise identifying at least one optimal number of instances for each of the at least one AI model by performing an optimization procedure for the loss function using the number of the user requests for the first service. The at least one operation may comprise performing at least one operation for executing instances for the at least one AI model according to the at least one optimal number of instances.

According to an embodiment, the loss function may comprise a component based on a difference between a result of inputting the number of the user requests in the response time AI model and the allowable response time.

According to an embodiment, the loss function may comprise the component based on the difference and a sum of the number of the instances of the at least one AI model.

According to an embodiment, the loss function may be based on Equation 1, and Equation 1 may be $Loss \left(\vec{r}, SLO\right) = {\sum }_{r ∈ \vec{r}} r + ρ \times ϕ \left(L\left(\vec{r}, \vec{w}\right), SLO\right)$. The *̅r̅*̅ may be the number of instances of the at least one AI model. The SLO may be the allowable response time. The *̅w̅*̅ may be the number of user requests per type. The *L*(*̅r̅*̅, *̅w̅*̅) may be the response time function. The ${\sum }_{r ∈ \vec{r}} r$ may be the sum of the number of the instances of the at least one AI model. The *ϕ* function may be the component based on the difference and based on Equation 2, and Equation 2 may be *ϕ*(x, y) = max (0, x - y). The *ρ* may be a constant.

According to an embodiment, identifying the at least one optimal number of instances for each of the at least one AI model by performing the optimization procedure for the loss function may comprise identifying the at least one optimal number of instances for each of the at least one AI model by performing the optimization procedure on the loss function with respect to the number of instances of the at least one AI model.

According to an embodiment, the optimization procedure may comprise a gradient descent method.

According to an embodiment, performing the at least one operation for executing the instances for the at least one AI model according to the at least one optimal number of instances may comprise executing the instances for the at least one AI model according to the at least one optimal number of instances.

According to an embodiment, performing the at least one operation for executing the instances for the at least one AI model according to the at least one optimal number of instances may comprise requesting an external electronic device to execute the instances for the at least one AI model according to the at least one optimal number of instances.

According to an embodiment, the at least one operation may further comprise receiving a command for setting the allowable response time.

According to an embodiment, a training data generating method for training a response time AI model of a service associated with at least one AI model may be provided. The method may comprise setting a number of user requests. The method may comprise setting a number of instances of the at least one AI model. The method may comprise executing an instance of the at least one AI model according to the number of instances of the at least one AI model. The method may comprise generating user requests according to the number of user requests. The method may comprise identifying responses corresponding to each of the user requests based on processing the user requests based on the instance of the at least one AI model. The method may comprise generating training data which includes, as an input value, the number of user requests and the number of instances of the at least one AI model, and includes, as an output value, response time corresponding to the responses.

According to an embodiment, a storage medium storing at least one instruction readable by a computer may be provided. The at least one instruction, when executed by at least a part of at least one processor (120) of an electronic device, may cause the electronic device to perform at least one operation. The at least one operation may comprise setting a number of user requests. The at least one operation may comprise setting a number of instances of the at least one AI model. The at least one operation may comprise executing an instance of the at least one AI model according to the number of instances of the at least one AI model. The at least one operation may comprise generating user requests according to the number of user requests. The at least one operation may comprise identifying responses corresponding to each of the user requests based on processing the user requests based on the instance of the at least one AI model. The at least one operation may comprise generating training data which includes, as an input value, the number of user requests and the number of instances of the at least one AI model, and includes, as an output value, response time corresponding to the responses.

According to an embodiment, an electronic device may comprise at least one processor (120). The electronic device may comprise memory (130) storing at least one instruction. The at least one instruction, when executed by at least a part of the at least one processor (120), may cause the electronic device to perform at least one operation. The at least one operation may comprise setting a number of user requests. The at least one operation may comprise setting a number of instances of the at least one AI model. The at least one operation may comprise executing an instance of the at least one AI model according to the number of instances of the at least one AI model. The at least one operation may comprise generating user requests according to the number of user requests. The at least one operation may comprise identifying responses corresponding to each of the user requests based on processing the user requests based on the instance of the at least one AI model. The at least one operation may comprise generating training data which includes, as an input value, the number of user requests and the number of instances of the at least one AI model, and includes, as an output value, response time corresponding to the responses.

It should be appreciated that an embodiment of the disclosure and the terms used therein are not intended to limit the technological features set forth herein to an embodiment and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1^{st}" and "2^{nd}," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or two or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

## Claims

1. A method for executing an instance of at least one artificial intelligence (AI) model, the method comprising:
identifying a response time AI model for at least one AI model associated with a first service, wherein the response time AI model is configured to receive a number of user requests for the first service and a number of instances of each of the at least one AI model as an input value to output response time;
identifying a loss function configured based on a number of instances of the at least one AI model, the response time AI model, and allowable response time;
identifying at least one optimal number of instances for each of the at least one AI model by performing an optimization procedure for the loss function using the number of the user requests for the first service; and
performing at least one operation for executing instances for the at least one AI model according to the at least one optimal number of instances.

2. The method of claim 1, wherein the loss function comprises a component based on a difference between a result of inputting the number of the user requests in the response time AI model and the allowable response time.

3. The method of claim 1 or 2, wherein the loss function comprises the component based on the difference and a sum of the number of the instances of the at least one AI model.

4. The method of any one of claims 1 to 3, wherein the loss function is based on Equation 1, and Equation 1 is as follows: $Loss \left(\vec{r}, SLO\right) = {\sum }_{r ∈ \vec{r}} r + ρ \times ϕ \left(L\left(\vec{r}, \vec{w}\right),SLO\right) ,$
where, the *̅r̅*̅ is the number of instances of the at least one AI model,
the SLO is the allowable response time,
the *̅w̅*̅ is the number of user requests per type,
the L(*̅r̅*̅, *̅w̅*̅) is the response time function,
the ${\sum }_{r ∈ \vec{r}} r$ is the sum of the number of the instances of the at least one AI model, and
the *ϕ* function is the component based on the difference and based on Equation 2, and Equation 2 is as follows: $ϕ \left(x, y\right) = max \left(0,x-y\right)$
where, the *ρ* is a constant.

5. The method of any one of claims 1 to 4, wherein identifying the at least one optimal number of instances for each of the at least one AI model by performing the optimization procedure for the loss function comprises:
identifying the at least one optimal number of instances for each of the at least one AI model by performing the optimization procedure on the loss function with respect to the number of instances of the at least one AI model.

6. The method of any one of claims 1 to 5, wherein the optimization procedure comprises a gradient descent method.

7. The method of any one of claims 1 to 6, wherein performing the at least one operation for executing the instances for the at least one AI model according to the at least one optimal number of instances comprises executing the instances for the at least one AI model according to the at least one optimal number of instances.

8. The method of any one of claims 1 to 7, wherein performing the at least one operation for executing the instances for the at least one AI model according to the at least one optimal number of instances comprises requesting an external electronic device to execute the instances for the at least one AI model according to the at least one optimal number of instances.

9. The method of any one of claims 1 to 8, further comprising:
receiving a command for setting the allowable response time.

10. A storage medium storing at least one instruction readable by a computer, the at least one instruction, when executed by at least a part of at least one or more processors (120) including processing circuitry of an electronic device individually or collectively, causing the electronic device to perform at least one operation,
wherein the at least one operation comprises:
identifying a response time artificial intelligence (AI) model for at least one AI model associated with a first service, wherein the response time AI model is configured to receive a number of user requests for the first service and a number of instances of each of the at least one AI model as an input value to output response time;
identifying a loss function configured based on a number of instances of the at least one AI model, the response time AI model, and allowable response time;
identifying at least one optimal number of instances for each of the at least one AI model by performing an optimization procedure for the loss function using the number of the user requests for the first service; and
performing at least one operation for executing instances for the at least one AI model according to the at least one optimal number of instances.

11. The storage medium of claim 10, wherein the loss function comprises a component based on a difference between a result of inputting the number of the user requests in the response time AI model and the allowable response time.

12. The storage medium of claim 10 or 11, wherein the loss function comprises the component based on the difference and a sum of the number of the instances of the at least one AI model.

13. The storage medium of any one of claims 10 to 12, wherein the loss function is based on Equation 1, and Equation 1 is as follows: $Loss \left(\vec{r}, SLO\right) = {\sum }_{r ∈ \vec{r}} r + ρ \times ϕ \left(L\left(\vec{r}, \vec{w}\right),SLO\right) ,$
where, the *̅r̅*̅ is the number of instances of the at least one AI model,
the SLO is the allowable response time,
the *̅w̅*̅ is the number of user requests per type,
the *L*(*̅r̅*̅, *̅w̅*̅) is the response time function,
the ${\sum }_{r ∈ \vec{r}} r$ is the sum of the number of the instances of the at least one AI model,
the *ϕ* function is the component based on the difference and based on Equation 2, and Equation 2 is as follows: $ϕ \left(x, y\right) = max \left(0,x-y\right)$
where, the *ρ* is a constant.

14. The storage medium of any one of claims 10 to 13, wherein identifying the at least one optimal number of instances for each of the at least one AI model by performing the optimization procedure for the loss function comprises:
identifying the at least one optimal number of instances for each of the at least one AI model by performing the optimization procedure on the loss function with respect to the number of instances of the at least one AI model.

15. An electronic device comprising:
one or more processors (120) including processing circuitry; and
memory (130) storing instructions that, when executed by at least a part of the one or processors individually or collectively, cause the electronic device to perform at least one operation,
wherein the at least one operation comprises:
identifying a response time artificial intelligence (AI) model for at least one AI model associated with a first service, wherein the response time AI model is configured to receive a number of user requests for the first service and a number of instances of each of the at least one AI model as an input value to output response time;
identifying a loss function configured based on a number of instances of the at least one AI model, the response time AI model, and allowable response time;
identifying at least one optimal number of instances for each of the at least one AI model by performing an optimization procedure for the loss function using the number of the user requests for the first service; and
performing at least one operation for executing instances for the at least one AI model according to the at least one optimal number of instances.
